(19) **Europäisches Patentamt**

**European Patent Office**

**Office européen des brevets**

(11) **EP 1 142 167 B1**

(12) **FASCICULE DE BREVET EUROPEEN**

(45) Date de publication et mention
de la délivrance du brevet:
**20.11.2002 Bulletin 2002/47**

(21) Numéro de dépôt: **00900555.4**

(22) Date de dépôt: **11.01.2000**

(51) Int Cl.$^7$: **H04B 10/18**

(86) Numéro de dépôt international:
**PCT/FR00/00044**

(87) Numéro de publication internationale:
**WO 00/042720 (20.07.2000 Gazette 2000/29)**

(54) **SYSTEMES DE TRANSMISSION PAR FIBRES OPTIQUES AVEC COMPENSATION DE LA DISPERSION CHROMATIQUE**

FASEROPTISCHE ÜBERTRAGUNGSSYSTEME MIT KOMPENSATION DER CHROMATISCHEN DISPERSION

OPTICAL FIBRE TRANSMISSION SYSTEM WITH CHROMATIC DISPERSION COMPENSATION

(84) Etats contractants désignés:
**AT BE CH CY DE DK ES FI FR GB GR IE IT LI LU MC NL PT SE**

(30) Priorité: **11.01.1999 FR 9900184**

(43) Date de publication de la demande:
**10.10.2001 Bulletin 2001/41**

(73) Titulaire: **FRANCE TELECOM**
**75015 Paris (FR)**

(72) Inventeurs:
• **GEORGES, Thierry**
**F-22700 Perros-Guirec (FR)**

• **LE GUEN, Daniel**
**F-22700 Louannec (FR)**
• **FAVRE, François**
**F-22700 Perros-Guirec (FR)**

(74) Mandataire: **Callon de Lamarck, Jean-Robert et al**
**Cabinet Régimbeau**
**20, rue de Chazelles**
**75847 Paris cedex 17 (FR)**

(56) Documents cités:
**EP-A- 0 575 881      FR-A- 2 757 720**
**GB-A- 2 299 473      US-A- 5 559 910**

## Description

La présente invention est relative aux systèmes de transmission par fibres optiques.

En particulier, l'invention trouve avantageusement application pour les systèmes de transmission longue distance et notamment pour les systèmes de transmission transocéaniques qui doivent assurer des transmissions d'informations sur des distances supérieures à 5000 km.

Il a déjà été proposé de nombreux systèmes de transmission longue distance qui mettent en oeuvre une modulation RZ (retour à zéro) - c'est à dire une modulation sous forme d'impulsions de durée inférieure au temps bit - et qui comprennent, entre deux amplificateurs qui sont par exemple des fibres dopées à l'erbium, deux tronçons de fibres dispersives qui sont de signes de dispersion chromatique opposés et qui se compensent.

Dans ces systèmes, la dispersion chromatique locale permet de réduire les phénomènes d'interaction non linéaire entre les canaux (mélange à quatre ondes), tandis que la compensation de la dispersion chromatique des fibres permet de disposer d'une dispersion chromatique moyenne qui est faible et par conséquent de minimiser les phénomènes d'élargissement d'impulsions.

La pente de la dispersion chromatique peut être réduite de différentes façons et notamment soit en utilisant des fibres à pente réduite, soit en utilisant des fibres de pentes de signes opposés, soit encore en démultiplexant les canaux et en compensant individuellement la dispersion chromatique de chacun des canaux.

Pour des présentations de systèmes de transmission optique mettant en oeuvre une compensation de dispersion chromatique, on pourra avantageusement se référer aux différentes publications suivantes :

[1] I. Morita, K. Tanaka, N. Edagawa, M. Suzuki, « 40 Gbit/s single-channel soliton transmission over 10200 km without active inline transmission control », Post-deadline paper, p.49, ECOC'98 (Madrid) ;
[2] N. Edagawa, I. Morita, M. Suzuki, S. Yamamoto, K. Tanaka, S. Akiba, « Long distance soliton WDM transmission using a dispersion-flattened fibre », Post-deadline paper PD19, OFC'97 (Dallas) ;
[3] M. Suzuki, H. Kidorf, N. Edagawa, H. Taga, N. Takeda, K. Imai, I. Morita, S. Yamamoto, E. Shibano, T. Miyakawa, E. Nazuka, M. Ma, F. Kerfoot, R. Maybach, H. Adelmann, V. Arya, C. Chen, S. Evangelides, D. Gray, B. Pedersen, A. Puc, « 170 Gbit/s transmission over 10850 km using large core transmission fibre », Post-deadline paper PD17, OFC'98 (San Jose) ;
[4] N. Edagawa, M. Suzuki, N. Takeda, K. Imai, S. Yamamoto, S. Akiba, « 213 Gbit/s (20x10.66) over 9000 km transmission experiment using dispersion-slope compensator », Post-deadline paper PD13, OFC'98 (San Jose) ;
[5] M. Murakami, T. Matsuda, T. Imai, « Quarter Terabit (25x10 Gbits/s) over 9288 km WDM, transmission experiment using nonlinear supported RZ pulse in higher order fiber dispersion managed line », Post-deadline paper, p.79, ECOC'98 (Madrid) ;
[6] D. Le Guen, A. O'Hare, S. Del Burgo, D. Grot, F. Favre, T. Georges, « Narrow band 640 Gbit/s soliton WDM transmission over 1200 km of standard fibre with 100 km - 21 dB amplifier spans », Post-deadline paper, p.61, ECOC'98 (Madrid).

Toutefois, les systèmes décrits dans les publications [1-5] présentent l'inconvénient de ne pas permettre d'atteindre des débits de transmission importants, parce que les phénomènes de modulation de phase croisée entre canaux adjacents empêchent un multiplexage suffisamment dense, c'est à dire une séparation entre canal inférieure à 0,8nm pour des canaux à 20 Gbit/s, une séparation de 1,8nm pour des canaux à 40 Gbit/s et une séparation de 0,4nm à 10 Gbit/s (références [1] et [2]). Le système de la référence [6] permet un multiplexage dense mais sur des distances trop courtes (2000 km) limitées par l'interaction.

Pour permettre des débits élevés sur des distances transocéaniques, il a également été proposé des systèmes de transmission qui mettent en oeuvre une modulation de type solitons.

Des systèmes de ce type sont par exemple décrits dans la publication suivante :

M. Nakazawa et al. « 16 Gbit/s WDM (20 Gbit/s x 8 channels) soliton transmission over 10,000 km using in-line synchronous modulation and optical filtering » PD10-1, Optical Soliton Transmission Research Group - NTT Access Network Systems Laboratories - Tokai, Ibaraki-ken 319-11 Japan.

Toutefois, la technique proposée dans l'article précité est très difficile à mettre en oeuvre du fait de la précision requise (meilleure que 0,1 ps/nm/km) sur la valeur de la dispersion chromatique de chacun des tronçons de fibres.

En outre, dans le cas où l'on utilise des fibres de pente de dispersion chromatique non nulle, cette technique ne permet une transmission que pour certaines longueurs d'onde.

Le but de l'invention est de palier les inconvénients des techniques antérieures et de proposer un système de transmission longue distance permettant des débits élevés avec un multiplexage dense et avec une bande passante importante.

On connaît par le document UK Patent Application, GB 2 299 473, un système de transmission optique longue distance comportant des moyens d'émission et de réception d'impulsions et une ligne optique qui s'étend entre lesdits moyens d'émission et de réception et qui comprend une alternance de tronçons de fibres dispersives de signes de dispersion chromatique opposés, ainsi qu'une pluralité d'amplificateurs, ladite ligne optique comportant un couple de tronçons de fibres dispersives de signes de dispersion chromatique opposés entre deux amplificateurs.

L'invention propose quant à elle tel un système de transmission optique longue distance comportant des moyens d'émission et de réception d'impulsions et une ligne optique qui s'étend entre lesdits moyens d'émission et de réception et qui comprend une alternance de tronçons de fibres dispersives de signes de dispersion chromatique opposés, ainsi qu'une pluralité d'amplificateurs, ladite ligne optique comportant au moins un couple de tronçons de fibres dispersives de signes de dispersion chromatique opposés entre deux amplificateurs, caractérisé en ce que ladite ligne optique comporte plusieurs tels couples entre deux amplificateur, et en ce que la dispersion cumulée C de la majorité des tronçons de la ligne optique vérifie la relation $|C| \Delta v^2 < 0.3$, où C est exprimée en ps/nm et où $\Delta v$ est la valeur spectrale à mi-hauteur des impulsions exprimée en THz.

Le système proposé par l'invention est par ailleurs avantageusement complété par les différentes caractéristiques suivantes prises seules ou selon toutes leurs combinaisons possibles :

- la dispersion cumulée C des tronçons de la ligne optique vérifie la relation

$$|C| \Delta v^2 < 0.25,$$

  où C est exprimée en ps/nm et où $\Delta v$ est exprimée en THz ;
- la dispersion cumulée C des tronçons de la ligne optique vérifie la relation

$$0.03 < |C| \Delta v^2$$

  où C est exprimée en ps/nm/km et où $\Delta v$ est exprimée en THz ;
- la dispersion chromatique des tronçons de fibres de dispersion anormale est de l'ordre de 17 ps/nm/km à la longueur d'onde de 1550 nm ;
- la dispersion chromatique des tronçons de fibres de dispersion normale est de l'ordre de -85 ps/nm/km ;
- la ligne optique comporte trois couples de tronçons de fibres dispersives de signes de dispersion chromatique opposés, entre deux amplificateurs ;
- un tronçon de fibre de dispersion anormale s'étend sur une distance qui est de l'ordre de 10 Km et un tronçon de fibre de dispersion normale sur une distance qui est de l'ordre de 2 Km ;
- la dispersion chromatique des tronçons de fibres de dispersion normale est de l'ordre de - 17 ps/nm/km ;

- la ligne optique comporte deux couples de tronçons de fibres dispersives de signes de dispersion chromatique opposés, entre deux amplificateurs ;
- un tronçon de fibre s'étend sur une distance qui est de l'ordre de 10 Km.

D'autres caractéristiques et avantages de l'invention ressortiront encore de la description qui suit. Cette description est purement illustrative et non limitative. Elle doit être lue en regard des figures annexées sur lesquelles :

- la figure 1 représente schématiquement un système de transmission conforme à un mode de réalisation possible de l'invention ;
- la figure 2 est un graphe sur lequel on a porté les cartes de cumul de dispersion d'un système de transmission conforme à un art antérieur connu et d'un système de transmission conforme à un mode de réalisation possible de l'invention.

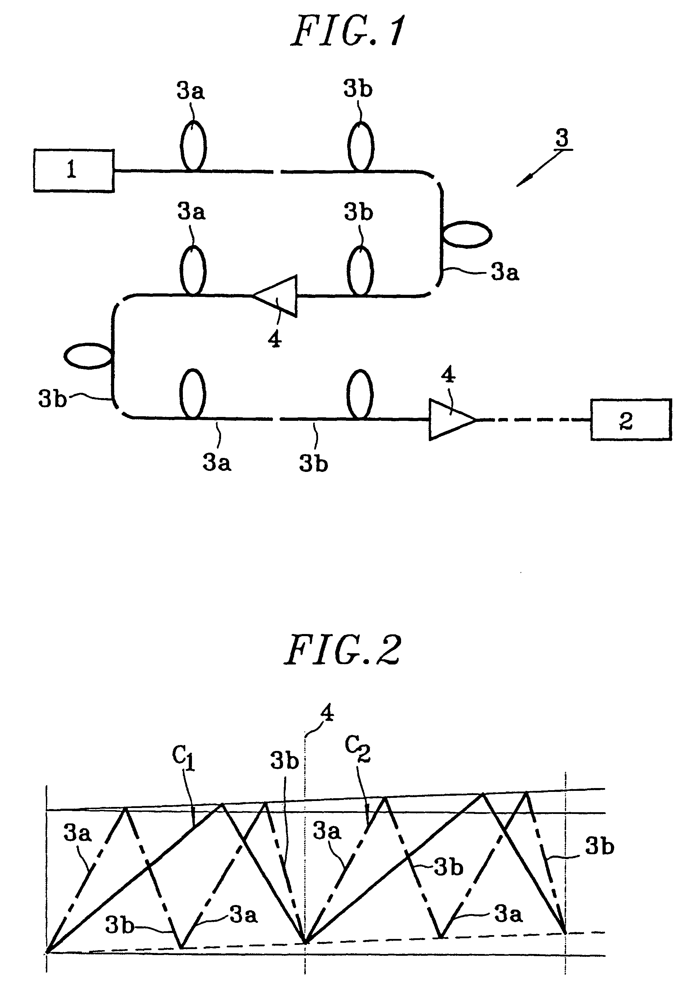

Le système représenté sur la figure 1 comporte des moyens d'émission 1, des moyens de réception 2 et une ligne de transmission optique 3 qui s'étend entre ces moyens d'émission et de réception 1 et 2.

Les moyens d'émission 1 génèrent un signal optique constitué d'une succession d'impulsions RZ. Les moyens de réception démodulent ce signal après transmission par la ligne 3.

Cette ligne de transmission optique 3 comporte une pluralité d'amplificateurs 4 qui sont régulièrement répartis dans sa longueur.

Entre deux amplificateurs 4 successifs, elle comporte une pluralité de tronçons de fibres 3a de dispersion anormale alternant avec des tronçons de fibres 3b de dispersion normale.

Ces tronçons de fibres 3a et 3b sont tels que, pour la majorité d'entre eux (au moins 90 %) leur dispersion cumulée C vérifie la relation :

$$|C| \Delta v^2 < 0.3 \qquad (R)$$

où $\Delta v$ est la largeur spectrale à mi-hauteur des impulsions (exprimée en THz) et où C est la dispersion cumulée exprimée en ps/nm.

Cette condition permet en effet de minimiser les interactions entre les impulsions.

De façon préférentielle, la dispersion cumulée vérifie :

$$|C| \Delta v^2 < 0.25$$

Ainsi, pour un débit par canal de 20 Gbits/s, la dispersion cumulée est avantageusement inférieure à 150 ps/nm ; pour un débit par canal de 40 Gbits/s, la dispersion cumulée est avantageusement inférieure à 30 ps/nm.

Par ailleurs, la dispersion cumulée des tronçons de la fibre vérifie également avantageusement la relation :

$$0{,}03 < |C|\Delta v^2$$

Cette condition permet en effet de réduire le mélange à quatre ondes et de réduire l'interaction entre deux impulsions successives.

Par ailleurs, le fait de multiplier les couples de tronçons de fibres 3a, 3b entre deux amplificateurs 4 permet d'utiliser des fibres très dispersives, tout en restant dans un domaine où la dispersion cumulée est suffisamment faible pour minimiser les interactions entre les impulsions. Les tronçons de fibres anormales sont avantageusement choisis avec une dispersion chromatique supérieure à 8 ps/nm/km, tandis que les tronçons de fibres normales sont quant à eux choisis avec une dispersion chromatique qui en valeur absolue est supérieure à 8 ps/nm/km.

A titre illustratif, on a représenté sur la figure 2 une carte de cumul de dispersion C1(z) (où z est la distance) d'un système de transmission vérifiant la relation R et comportant un seul couple de tronçons de fibres entre deux amplificateurs 4. On a également porté sur cette figure 2 une carte de cumul de dispersion C2(z) (la dispersion chromatique locale D1(2) est donnée par la pente de C1(2)) d'un système qui, pour le même espacement entre les amplificateurs 4, comporte deux couples de tronçons de fibres entre les amplificateurs, ladite carte de transmission vérifiant C2(2) = 2C1(z/2).

La deuxième carte de dispersion permet des impulsions plus étroites, qui interagissent moins et ont des effets de modulation de phase croisée plus réduits que dans le cas de la première carte de dispersion.

Ceci peut être généralisé dans le cas d'une carte de transmission vérifiant Cn(z) = nC1(z/n) et correspondant à un système de transmission comportant n fois plus de tronçons dispersifs entre deux amplificateurs successifs (où n est un nombre entier).

Sur la figure 2, la dispersion cumulée a été représentée (en ps/nm) par les courbes en pointillés.

Les tronçons de fibres anormales 3a sont avantageusement constitués par des fibres monomodes utilisées de façon standard dans le domaine des télécommunications (fibres également désignées sous la terminologie de fibres SMF par l'homme du métier).

Les fibres SMF sont en effet très dispersives.

Elles présentent en outre une grande aire effective de modes - ce qui réduit la non-linéarité - de faibles pertes et de faibles pentes de dispersion chromatique.

Les tronçons de fibres normales 3b sont avantageusement des fibres compensatrices de dispersion chromatique- qui sont désignées sous la terminologie de fibres DCF par l'homme du métier - ou des fibres connues par l'homme du métier sous la terminologie RDF, dont la dispersion chromatique est sensiblement opposée à celles des fibres SMF.

La longueur séparant deux amplificateurs 4 successifs est de préférence comprise entre 35 et 60 km.

Le niveau de puissance de sortie des amplificateurs 4 est choisi de façon à être suffisant pour permettre un rapport signal à bruit satisfaisant et une faible gigue.

Les caractéristiques des moyens 1 qui constituent la source d'émission (largeur spectrale, éléments dispersifs en entrée de lignes, etc.) sont définies par la carte de dispersion chromatique de la ligne de transmission 3 et par la puissance en ligne de chaque canal. Elles sont choisies pour obtenir un point de fonctionnement stable permettant de faibles variations de largeur spectrale lors de la propagation.

La dispersion en entrée des moyens de réception 2 est optimisée de façon à minimiser la gigue et à remettre en forme temporelle le signal.

Pour réduire un peu plus les effets de la modulation de phase croisée,

1. un filtrage guidant peut être utilisé,
2. une surmodulation de la dispersion chromatique d'une périodicité supérieure à la distance entre amplificateurs peut être ajoutée : elle est obtenue en modifiant les longueurs respectives des tronçons dispersifs.

Un système du type de celui qui vient d'être décrit peut être utilisé pour réaliser une transmission d'un multiplex de Nx20 Gbits/s (où N est un entier supérieur ou égal à 1, qui peut aller jusqu'à 40 ou être supérieur) sur une distance transocéanique (>5000 km) avec pour fibres de ligne, la fibre standard (SMF) qui présente une dispersion chromatique anormale de l'ordre de 17 ps/nm/km à la longueur d'onde de 1550 nm et une fibre compensatrice de dispersion chromatique (fibre DCF) qui présente une dispersion chromatique normale de l'ordre de -85 ps/nm/km. Entre deux amplificateurs 4, la ligne de transmission 3 est constituée de trois tronçons de fibres 3a de type SMF présentant chacun une longueur égale à 8 km et de trois tronçons de fibres 3b de type DCF alternant avec les tronçons SMF et présentant chacun une longueur de 1.59 km, ce qui correspond à une longueur entre deux amplificateurs approximativement égale à 29 km.

La dispersion chromatique moyenne est anormale (légèrement inférieure à 0.1 ps/nm/km). La puissance des amplificateurs de ligne est de -1.5 dBm/canal (soit 10.5 dBm pour 16 canaux). La durée des impulsions est de l'ordre de 12 ps. La dispersion chromatique initiale (typiquement - 70 ps/nm) est optimisée pour obtenir une propagation stable. La forte valeur de la dispersion chromatique permet un espacement entre les canaux de 0,8 nm, voire de 0,6 nm.

On utilise avantageusement pour les tronçons 3b des fibres de type DCF ayant une pente de dispersion chromatique de l'ordre de -0,26 ps/nm$^2$/km. La pente de la dispersion chromatique des fibres SMF - qui est de 0,053 ps/nm$^2$/km est alors totalement compensée. La bande de longueur d'onde de transmission n'est alors limitée que par la platitude des amplificateurs et peut donc excéder 25 nm.

En variante encore, on peut utiliser des tronçons de fibres SMF de dispersion chromatique de l'ordre de 17 ps/nm/km à la longueur d'onde de 1550 nm et des tronçons de fibres RDF de dispersion chromatique opposée, c'est à dire de dispersion chromatique de l'ordre de -17 ps/nm/km. Entre deux amplificateurs 4, la ligne de transmission 3 est constituée de deux tronçons de fibres 3a de type SMF présentant chacun une longueur égale à 8 km et de deux tronçons de fibres 3b de type RDF alternant avec les tronçons SMF et présentant chacun une longueur de 7,9 km, ce qui correspond à une longueur entre deux amplificateurs approximativement égale à 32 km.

La dispersion chromatique moyenne est légèrement inférieure à 0.1 ps/nm/km. La puissance des amplificateurs de ligne est de 2 dBm/canal (soit 10 dBm pour 16 canaux). La durée des impulsions est de l'ordre de 13 ps. L'espacement entre les canaux peut être de 0,8 nm ou même 0,6 nm grâce à la forte valeur de la dispersion chromatique. D'autre part, les RDF ont une pente de dispersion chromatique de l'ordre de -0,05 ps/nm$^2$/km compensant intégralement la pente de la dispersion chromatique de la SMF (0,053 ps/nm$^2$/km). La bande totale est donc limitée par la platitude des amplificateurs et peut donc excéder 25 nm.

Un débit total excédant 40x20 Gbits/s peut être transmis sur une distance transocéanique.

**Revendications**

1. Système de transmission optique longue distance comportant des moyens d'émission (1) et de réception d'impulsions (2) et une ligne optique (3) qui s'étend entre lesdits moyens d'émission (1) et de réception (2) et qui comprend une alternance de tronçons (3a, 3b) de fibres dispersives de signes de dispersion chromatique opposés, ainsi qu'une pluralité d'amplificateurs (4), **caractérisé en ce que** la ligne optique (3) comporte plusieurs couples de tronçons (3a, 3b) de fibres dispersives de signes de dispersion chromatique opposés entre deux amplificateurs (4), et **en ce que** la dispersion cumulée C de la majorité des tronçons de la ligne optique vérifie la relation

$$|C| \, \Delta v^2 < 0.3,$$

où C est exprimée en ps/nm et où $\Delta v$ est la valeur

spectrale à mi-hauteur des impulsions exprimée en THz.

2. Système selon la revendication 1, **caractérisé en ce que** la dispersion cumulée C des tronçons (3a, 3b) de la ligne optique (3) vérifie la relation

$$|C| \, \Delta v^2 < 0.25,$$

où C est exprimée en ps/nm et où $\Delta v$ est exprimée en THz.

3. Système selon l'une des revendications 1 et 2, **caractérisé en ce que** la dispersion cumulée C des (3a, 3b) de la ligne optique (3) vérifie la relation

$$0.03 < |C| \, \Delta v^2$$

où C est exprimée en ps/nm et où $\Delta v$ est exprimée en THz.

4. Système selon l'une des revendications précédentes, **caractérisé en ce que** la dispersion chromatique des tronçons (3a) de fibres de dispersion anormale est de l'ordre de 17 ps/nm/km à la longueur d'onde de 1550 nm.

5. Système selon la revendication 4, **caractérisé en ce que** la dispersion chromatique des tronçons (3b) de fibres de dispersion normale est de l'ordre de -85 ps/nm/km.

6. Système selon la revendication 5, **caractérisé en ce que** la ligne optique (3) comporte trois couples de tronçons (3a, 3b) de fibres dispersives de signes de dispersion chromatique opposés, entre deux amplificateurs (4).

7. Système selon la revendication 6, **caractérisé en ce qu'**un tronçon (3a) de fibre de dispersion anormale s'étend sur une distance qui est de l'ordre de 10 Km et un tronçon de fibre de dispersion normale sur une distance qui est de l'ordre de 2 Km.

8. Système selon la revendication 4, **caractérisé en ce que** la dispersion chromatique des tronçons (3b) de fibres de dispersion normale est de l'ordre de -17 ps/nm/km.

9. Système selon la revendication 8, **caractérisé en ce que** la ligne optique comporte deux couples de tronçons (3a, 3b) de fibres dispersives de signes de dispersion chromatique opposés, entre deux amplificateurs.

10. Système selon la revendication 9, **caractérisé en**

**ce qu'**un tronçon de fibre (3a, 3b) s'étend sur une distance qui est de l'ordre de 10 Km.

11. Système selon l'une des revendications précédentes, **caractérisé en ce qu'**il comporte des moyens de filtrage guidant.

12. Système selon l'une des revendications précédentes, **caractérisé en ce que** les longueurs respectives des tronçons dispersifs sont choisies pour permettre une surmodulation de la dispersion chromatique.

**Patentansprüche**

1. Langreichweitiges optisches Übertragungssystem, das ein Pulssendemittel (1) und ein Pulsempfangsmittel (2) und eine optische Leitung (3) umfaßt, die sich zwischen dem Sendemittel (1) und dem Empfangsmittel (2) erstreckt und abwechselnd dispersive Faserabschnitte (3a, 3b) mit umgekehrtem Vorzeichen für die chromatische Dispersion umfaßt, sowie mehrere Verstärker (4), **dadurch gekennzeichnet, daß** die optische Leitung (3) mehrere Paare dispersiver Faserabschnitte (3a, 3b) mit umgekehrtem Vorzeichen für die chromatische Dispersion zwischen zwei Verstärkern (4) umfaßt, und daß die kumulierte Dispersion (C) der Mehrzahl der Abschnitte der optischen Leitung die Beziehung

$$|C|\Delta v^2 < 0.3$$

erfüllt, wobei C in ps/nm ausgedrückt ist und $\Delta v$ der in THz ausgedrückte Spektralwert bei mittlerer Pulshöhe ist.

2. System nach Anspruch 1, **dadurch gekennzeichnet, daß** die kumulierte Dispersion C der Abschnitte (3a, 3b) der optischen Leitung (3) die Beziehung

$$|C|\Delta v^2 < 0.25,$$

erfüllt, wobei C in ps/nm ausgedrückt ist, und $\Delta v$ in THz.

3. System nach einem der Ansprüche 1 oder 2, **dadurch gekennzeichnet, daß** die kumulierte Dispersion C der Abschnitte (3a, 3b) der optischen Leitung (3) die Beziehung

$$0.03 < |C|\Delta v^2$$

erfüllt, wobei C in ps/nm ausgedrückt ist, und $\Delta v$ in THz.

4. System nach einem der vorhergehenden Ansprüche, **dadurch gekennzeichnet, daß** die chromatische Dispersion der Faserabschnitte (3a) mit anormaler Dispersion in der Größenordnung von 17 ps/nm/km bei der Wellenlänge 1550 nm ist.

5. System nach Anspruch 4, **dadurch gekennzeichnet, daß** die chromatische Dispersion der Faserabschnitte (3b) mit normaler Dispersion in der Größenordnung von -85 ps/nm/km ist.

6. System nach Anspruch 5, **dadurch gekennzeichnet, daß** die optische Leitung (3) drei Paare dispersiver Faserabschnitte (3a, 3b) mit umgekehrtem Vorzeichen für die chromatische Dispersion zwischen zwei Verstärkern (4) umfaßt.

7. System nach Anspruch 6, **dadurch gekennzeichnet, daß** ein Faserabschnitt (3a) mit anormaler Dispersion sich über eine Distanz erstreckt, die in der Größenordnung von 10 km liegt, und ein Faserabschnitt mit normaler Dispersion sich über eine Distanz erstreckt, die in der Größenordnung von 2 km liegt.

8. System nach Anspruch 4, **dadurch gekennzeichnet, daß** die chromatische Dispersion der Faserabschnitte (3b) mit normaler Dispersion in der Größenordnung von -17 ps/nm/km liegt.

9. System nach Anspruch 8, **dadurch gekennzeichnet, daß** die optische Leitung zwei Paare (3a, 3b) dispersiver Faserabschnitte mit umgekehrtem Vorzeichen für die chromatische Dispersion zwischen zwei Verstärkern umfaßt.

10. System nach Anspruch 9, **dadurch gekennzeichnet, daß** sich ein Faserabschnitt (3a, 3b) über eine Distanz erstreckt, die in der Größenordnung von 10 km liegt.

11. System nach einem der vorhergehenden Ansprüche, **dadurch gekennzeichnet, daß** es Wellenleiterfiltermittel umfaßt.

12. System nach einem der vorhergehenden Ansprüche, **dadurch gekennzeichnet, daß** die entsprechenden Längen der dispersiven Abschnitte so gewählt sind, daß sie eine Übermodulation der chromatischen Dispersion ermöglichen.

**Claims**

1. A long-distance optical transmission system comprising pulse emitter and receiver means (1, 2) and an optical line (3) which extends between said emitter and receiver means (1, 2) and which comprises alternating segments (3a, 3b) of dispersive fibers having chromatic dispersion of opposite signs, and also having a plurality of amplifiers (4), the system being **characterized in that** the optical line (3) comprises a plurality of pairs of dispersive fiber segments (3a, 3b) having chromatic dispersion of opposite signs between successive amplifiers (4), and **in that** the cumulative dispersion C over the majority of the segments of the optical line satisfies the relationship

$$|C|\Delta v^2 < 0.3$$

where C is expressed in ps/nm and where $\Delta v$ is the half-height spectral value of the pulses expressed in THz.

2. A system according to claim 1, **characterized in that** the cumulative dispersion C of the segments (3a, 3b) of the optical line (3) satisfies the relationship:

$$|C|\Delta v^2 < 0.25$$

where C is expressed in ps/nm and where $\Delta v$ is expressed in THz.

3. A system according to claim 1 or claim 2, **characterized in that** the cumulative dispersion C of the segments (3a, 3b) of the optical line (3) satisfies the relationship:

$$0.3 < |C|\Delta v^2$$

where C is expressed in ps/nm and where $\Delta v$ is expressed in THz.

4. A system according to any preceding claim, **characterized in that** the chromatic dispersion of the segments (3a) of anomalous dispersion fiber is about 17 ps/nm/km at a wavelength of 1550 nm.

5. A system according to claim 4, **characterized in that** the chromatic dispersion of segments (3b) of normal dispersion fiber is about -85 ps/nm/km.

6. A system according to claim 5, **characterized in that** the optical line (3) has three pairs of segments (3a, 3b) of dispersive fibers having chromatic dispersion of opposite signs, between successive amplifiers (4).

7. A system according to claim 6, **characterized in that** a segment (3a) of anomalous dispersion fiber extends over a distance of about 10 km and a segment of normal dispersion fiber extends over a distance of about 2 km.

8. A system according to claim 4, **characterized in that** the chromatic dispersion of the segments (3b) of normal dispersion fiber is about-17 ps/nm/km.

9. A system according to claim 8, **characterized in that** the optical line has two pairs of segments (3a, 3b) of dispersive fibers having chromatic dispersion of opposite signs between successive amplifiers.

10. A system according to claim 9, **characterized in that** a segment of fiber (3a, 3b) extends over a distance of about 10 km.

11. A system according to any preceding claim, **characterized in that** it includes guiding filtering means.

12. A system according to any preceding claim, **characterized in that** the respective lengths of the dispersive segments are selected so as to enable overmodulation of the chromatic dispersion.

# FIG.1

# FIG.2